# FASCICULE DE BREVET EUROPEEN

(11) **EP 3 662 447 B1**
(45) Date de publication et mention de la délivrance du brevet: **13.04.2022**
(21) Numéro de dépôt: 18762372.3
(22) Date de dépôt: 03.08.2018
(51) Int. Cl.: G06T 7/586, G06T 7/521

(54) **PROCEDE DE CONTROLE NON DESTRUCTIF D'UNE PIECE AERONAUTIQUE ET SYSTEME ASSOCIE**
VERFAHREN ZUR ZERSTÖRUNGSFREIEN PRÜFUNG EINES AERONAUTISCHEN TEILS UND SYSTEM DAFÜR
METHOD FOR THE NON-DESTRUCTIVE INSPECTION OF AN AERONAUTICAL PART AND SYSTEM THEREOF

(30) Priorité: 03.08.2017 FR 1757490
(43) Date de publication de la demande: 10.06.2020
(73) Titulaire: Safran, 75015 Paris (FR)
(72) Inventeur: PICARD, Sylvaine, 77550 Moissy-Cramayel (FR); LE GUILLOUX, Yann, 77550 Moissy-Cramayel (FR)
(74) Mandataire: Regimbeau
(86) Numéro de dépôt international: PCT/FR2018/052017
(87) Numéro de publication internationale: WO 2019/025745

(56) Documents cités:
- SUN ET AL: "Object surface recovery using a multi-light photometric stereo technique for non-Lambertian surfaces subject to shadows and specularities", IMAGE AND VISION COMPUTING, ELSEVIER, GUILDFORD, GB, vol. 25, no. 7, 6 mai 2007 (2007-05-06), pages 1050-1057, XP022062607, ISSN: 0262-8856, DOI: 10.1016/J.IMAVIS.2006.04.025
- DINKAR N BHAT ET AL: "Stereo and Specular Reflection", INTERNATIONAL JOURNAL OF COMPUTER INTERNATIONAL JOURNAL OF COMPUTER VISION, vol. 26, no. 2, 1 janvier 1998 (1998-01-01), pages 91-106, XP055214253,

## Description

### DOMAINE DE L'INVENTION

L'invention concerne un procédé de contrôle non destructif d'une pièce aéronautique, par acquisition d'images stéréoscopiques et détermination d'un modèle en trois dimensions de la pièce, ainsi qu'un système permettant d'acquérir ce type d'images et de contrôler une telle pièce aéronautique.

### ETAT DE LA TECHNIQUE

La mesure tridimensionnelle d'une surface est typiquement réalisée par contact. La surface d'une pièce, fixée sur une table de mesure, est parcourue par une tête de mesure, permettant d'acquérir les coordonnées spatiales de la surface de la pièce. Cette méthode est particulièrement invasive et la vitesse d'acquisition des données spatiales est limitée par la durée du parcours de la tête de mesure sur la surface.

A cet effet, il est connu d'acquérir une image en trois dimensions d'une pièce sans contact par stéréoscopie. Lors d'une mesure par stéréoscopie, deux images de la surface sont réalisées par deux capteurs optiques à deux endroits de l'espace différents. Il est ainsi possible de reconstruire la structure tridimensionnelle de la surface en comparant les deux images.

De manière à faciliter la reconstruction de la surface en trois dimensions, il est également connu d'utiliser une méthode de projection lumineuse structurée. Cette méthode consiste à projeter un motif lumineux connu sur la surface de la pièce à mesurer, puis d'imager la surface avec un ou plusieurs capteurs optiques. La structure de la surface est ensuite calculée en comparant le motif original au motif diffusé par la surface, puis imagé par chacun des capteurs, ou en comparant les motifs imagés entre eux. Cette méthode peut être mise en œuvre seulement si la réflexion du motif sur la surface de la pièce mesurée est une réflexion diffusive (ou lambertienne) : la luminance réfléchie est la même dans l'ensemble des directions du demi-espace délimité par la surface. Ainsi, des rayons lumineux émis par un point de la surface peuvent atteindre l'ensemble des capteurs, ce qui permet d'associer un pixel de chacun des capteurs au même point de la surface.

Cette méthode de mesure n'est pas adaptée à la mesure de surfaces entraînant des réflexions spéculaires, c'est-à-dire lorsqu'un rayon incident à la surface est réfléchi selon une direction unique, ou de manière plus générale selon une direction préférentielle. Dans ce cas, les images acquises par les deux capteurs ne sont pas appariables de façon fiable et précise. De plus, les appariements entre réflexions spéculaires conduisent à une reconstruction erronée car ces réflexions ne correspondent en général pas au même point de la surface.

A cet effet, il est connu de matifier la surface avant de réaliser une mesure stéréoscopique de la surface. La matification d'une surface consiste à déposer une poudre sur la surface à mesurer, la poudre entraînant des propriétés de réflexion diffusives ou lambertiennes à la surface.

Le dépôt de la poudre est long et coûteux. De plus, l'épaisseur de la couche de poudre sur la surface à mesurer introduit un biais dans la mesure.

Il est également connu à cet effet d'éclairer la pièce avec plusieurs projecteurs. Sun *et al.* (Sun, J., Smith, M., Smith, L., Midha, S., & Bamber, J. (2007), Object surface recovery using a multi-light photometric stereo technique for non-Lambertian surfaces subject to shadows and specularities, Image and Vision Computing, 25(7), 1050-1057) décrit la détermination d'un modèle en trois dimensions d'une pièce par stéréoscopie, dans lequel on acquiert des images stéréoscopiques avec différents éclairages de la pièce. Ainsi, il est possible d'acquérir des images stéréoscopiques présentant différentes localisations des spécularités. Les spécularités peuvent être effacées numériquement. Toutefois, la précision de cette méthode peut être limitée, et la mise en œuvre de cette méthode nécessite six sources d'éclairage dont l'installation et le contrôle peuvent être complexes.

### RESUME DE L'INVENTION

Un but de l'invention est de proposer une solution pour pouvoir acquérir des images stéréoscopiques, permettant de déterminer un modèle en trois dimensions d'une pièce aéronautique, sans contact mécanique direct avec la surface et sans étape de matification.

En particulier, un objet de l'invention est un procédé de contrôle non destructif d'une pièce aéronautique, par acquisition d'images stéréoscopiques et détermination d'un modèle en trois dimensions de la pièce, la pièce étant délimitée par une surface, ledit procédé mettant en œuvre :
a) une projection d'un éclairage sur la surface par un premier projecteur ;
b) une acquisition d'une image stéréoscopique de la surface par un premier capteur et par un deuxième capteur, agencés à deux endroits différents ;
c) une détection d'une ou de plusieurs spécularités sur chacune des images des capteurs ;
   le procédé étant caractérisé en ce qu'il met en œuvre :
d) une extinction d'une ou de parties de l'éclairage entraînant la ou les spécularités en direction du ou des capteurs ; puis
e) une acquisition d'une image stéréoscopique de la surface par chacun des capteurs ;
   les opérations a) à e) étant également réalisées en projetant un éclairage sur la surface par un deuxième projecteur, le deuxième projecteur étant agencé à un endroit différent du premier projecteur ; le procédé mettant en œuvre une détermination du modèle en trois dimensions de la pièce à partir des images stéréoscopiques obtenues lors de l'acquisition e) sous éclairage du premier projecteur et d'images stéréoscopiques obtenues lors de l'acquisition sous éclairage du deuxième projecteur, un premier modèle en trois dimensions de la pièce étant déterminé à partir des images obtenues lors d'une acquisition e) sous éclairage du premier projecteur, un deuxième modèle en trois dimensions de la pièce étant déterminé à partir des images obtenues lors d'une acquisition e) sous éclairage du deuxième projecteur, et un troisième modèle en trois dimensions de la pièce étant déterminé par fusion du premier modèle et du deuxième modèle.

On comprend qu'avec un tel procédé, il est possible d'acquérir des images stéréoscopiques et de déterminer un modèle d'une pièce dont la surface comprend des spécularités, de manière non invasive, sans interaction avec la pièce (différemment des méthodes de mesure connues, avec une sonde ou une poudre).

L'invention est avantageusement complétée par les caractéristiques suivantes, prises individuellement ou en l'une quelconque de leurs combinaisons techniquement possibles :
- lors de l'acquisition e), on projette un éclairage sur la surface par le deuxième projecteur sans projection simultanée d'un éclairage par le premier projecteur ;
- lors de la détermination du modèle en trois dimensions, on fusionne entre elles les images du premier capteur acquises sous différents éclairages après l'extinction d), on fusionne entre elles les images du deuxième capteur acquises sous différents éclairages après l'extinction d), et on détermine le modèle en trois dimensions de la pièce à partir des images ainsi obtenues par fusion ;
- on détermine la ou les parties de l'éclairage à éteindre, lors de l'extinction d), en :
   - projetant un motif lumineux sur la surface au moyen du premier projecteur et/ou du second projecteur ;
   - associant l'image d'un motif lumineux sur la surface et le motif lumineux projeté ;
   - éteignant une ou plusieurs parties d'un projecteur, associées à une ou plusieurs parties de l'image du motif lumineux correspondant à une ou plusieurs spécularités ;
- on détermine la ou les parties de l'éclairage à éteindre en :
   - projetant une séquence de motifs lumineux, chaque motif lumineux de la séquence comprenant plusieurs parties d'intensités lumineuses binaires, la séquence des intensités de chaque partie de motif lumineux permettant d'identifier ladite partie de motif lumineux ;
   - filmant la surface avec un capteur pendant la projection de la séquence de motifs lumineux, détecter une spécularité et identifier une dite partie de l'éclairage à éteindre par la séquence d'une partie de l'image du capteur comprenant la spécularité ;
- on détermine une droite normale à la surface à un point d'une partie spéculaire, en mettant en œuvre :
- la pièce est contrôlée dans un espace de travail et dans lequel on agence le premier projecteur et le deuxième projecteur de manière à ce que, pour chaque capteur et dans l'ensemble de l'espace de travail, l'angle α d'intersection de l'ellipse ayant comme foyers le premier projecteur et le capteur et de l'ellipse ayant comme foyers le deuxième projecteur et le capteur, soit supérieur à 10°.

Un autre objet de l'invention est un système de contrôle non destructif d'une pièce aéronautique, par détermination d'un modèle en trois dimensions de ladite pièce selon la revendication 7.

### PRESENTATION DES FIGURES

D'autres caractéristiques et avantages ressortiront encore de la description qui suit, laquelle est purement illustrative et non limitative, et doit être lue en regard des figures annexées, parmi lesquelles :
- la figure 1 illustre un procédé d'acquisition d'images stéréoscopiques et de détermination d'un modèle en trois dimensions d'une pièce ;
- la figure 2 illustre un procédé d'acquisition d'images stéréoscopiques et détermination d'un modèle en trois dimensions d'une pièce ;
- les figures 3 à 7 illustrent des étapes d'un procédé d'acquisition d'une images stéréoscopiques d'une pièce ;
- la figure 8 illustre schématiquement un motif lumineux sous forme de séquence ;
- la figure 9 illustre schématiquement la surface d'une pièce, un capteur et un projecteur ;
- la figure 10 illustre schématiquement la surface d'une pièce, un capteur et deux projecteurs.

### DEFINITIONS

Le terme « spéculaire » désigne la capacité d'une surface à réfléchir un rayon lumineux incident selon une direction préférentielle et plus précisément une direction sensiblement unique, dans le demi-espace délimité par la surface. Autrement dit, la lumière d'un rayon incident n'est pas ou peu diffusée par une surface : une réflexion spéculaire est différente d'une réflexion diffuse ou lambertienne.

Le terme « spécularité » désigne la réflexion spéculaire d'une surface, en un point. Elle est dirigée dans la direction préférentielle de réflexion du rayon lumineux incident.

Le terme « fusion d'image » désigne un traitement d'image, prenant en compte les informations provenant de plusieurs images d'entrée, et produisant une donnée ou un ensemble de données comprenant plus d'informations que les images d'entrée considérées individuellement.

Le terme « angle d'intersection de deux coniques », en particulier « de deux ellipses », en un point commun aux deux coniques, désigne l'angle minimum formé par les droites tangentes aux coniques en ce point.

### DESCRIPTION DE L'INVENTION

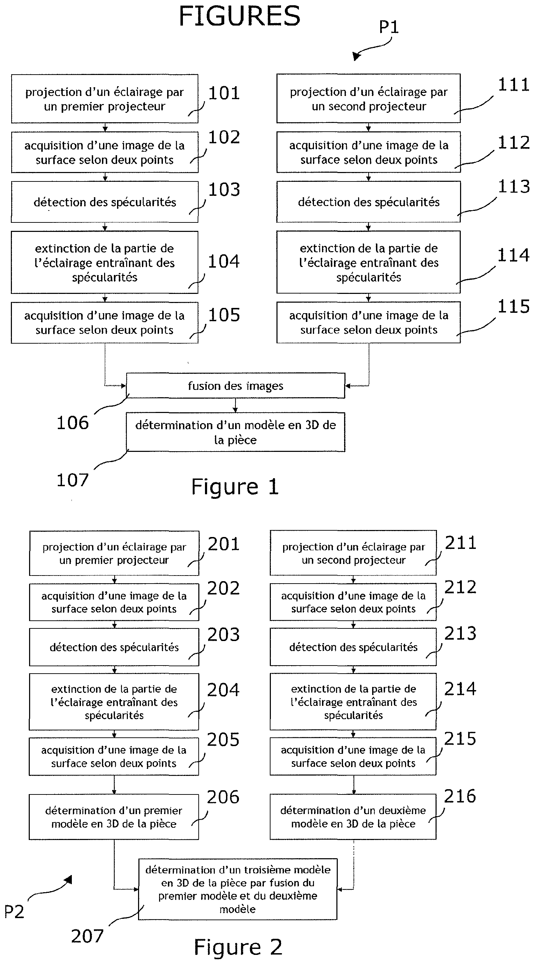

La figure 1 illustre un procédé P1 de contrôle non destructif d'une pièce 5 aéronautique et de détermination d'un modèle en trois dimensions de la pièce 5. Dans un mode de réalisation de l'invention, la surface 11 de la pièce 5 considérée comprend une partie spéculaire 12. Cependant, l'acquisition d'images stéréoscopiques, et la détermination d'un modèle en trois dimensions d'une pièce 5 est possible en l'absence de réflexion spéculaire à la surface 11 de la pièce 5.

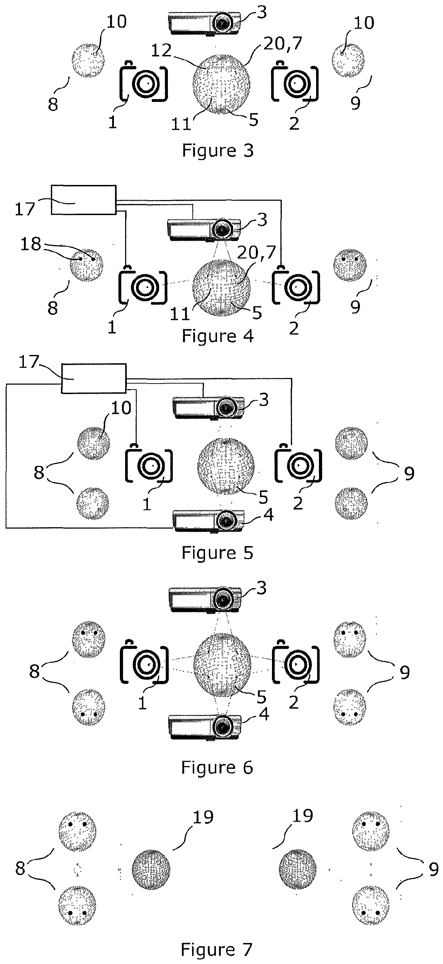

Lors d'une étape 101 (illustrée en figure 3), l'utilisateur peut projeter un éclairage 20 sur la surface 11 d'une pièce 5, avec un premier projecteur 3. L'éclairage peut avantageusement mettre en œuvre la projection d'un motif lumineux 7, ou être un motif lumineux 7.

Lors de l'étape 102 (illustrée en figure 3), l'acquisition d'une image stéréoscopique de la surface 11 de la pièce 5 est réalisée par un premier capteur 1 et un par un deuxième capteur 2. Les capteurs 1,2 sont agencés à des endroits différents de l'espace. Les capteurs 1,2 utilisés peuvent être des capteurs standards de photographies, par exemple de type CCD, CMOS, des caméras industrielles, ou tout autre dispositif formant une image résolue de la surface 11 observée.

Une image 8 d'un premier capteur 1 est illustrée à gauche de la figure 3 et une image 9 d'un deuxième capteur 2 est illustrée à droite de la figure 3. Sur chacune de ces images, une spécularité 10 est imagée. Les deux spécularités 10 sont illustrées par des points gris. La spécularité 10 de chacune des images est différente : dans l'image 8 du premier capteur 1, la spécularité 10 observée correspond à une partie spéculaire 12 comprise dans la partie gauche de la pièce 5 observée, et dans l'image 9 du deuxième capteur 2, la spécularité 10 observée correspond à une partie spéculaire 12 comprise dans la partie droite de la pièce 5 observée.

Lors d'une étape 103, l'utilisateur et/ou une unité de commande 17 détectent la ou les spécularités 10 dans chacune des images des capteurs 1,2 obtenues lors de l'étape 102 ou 202. Les spécularités 10 peuvent être détectées dans l'image par la présence de saturations locales d'un ou de plusieurs pixels voisins dans l'image. De manière générale, les spécularités 10 peuvent être détectées en post-traitement, par exemple par segmentation de l'image, par seuillage des niveaux de gris ou de couleurs. L'emplacement des spécularités 10 dans l'image 8,9 est directement dépendant des positions relatives du projecteur, de la surface 11 de la pièce 5 et du capteur 1,2.

Lors d'une étape 104, l'utilisateur, ou une unité de commande 17 de l'éclairage, peuvent masquer et/ou éteindre la ou les parties de l'éclairage 20 entraînant une ou des spécularités 10 à la surface 11 de la pièce 5 en direction des capteurs 1,2. La figure 4 illustre un premier projecteur 3 projetant un éclairage 20 sur la surface 11 de la pièce 5, dans lequel les rayons lumineux incidents, représentés par des flèches allant du premier projecteur 3 à la surface 11, sont sélectivement éteints. Une unité de commande 17 peut être reliée électriquement au premier capteur 1 et au deuxième capteur 2 de manière à charger les données des capteurs 1,2 vers l'unité de commande 17. La ou les parties de l'éclairage projeté par le premier projecteur 3 entraînant la/les spécularité(s) 10 sont calculées en fonction des images de la surface 11 par les capteurs 1,2. L'unité de commande 17, reliée électriquement au premier projecteur 3, peut ainsi contrôler l'état de fonctionnement d'une partie de l'éclairage projeté par exemple en masquant ou en éteignant les pixels correspondant aux spécularités 10.

Ainsi, les spécularités 10 de la surface 11 peuvent être éteintes. L'extinction localisée du projecteur entraîne une ou plusieurs zones d'ombre 18 locales sur la surface 11 à la place d'une ou plusieurs parties de l'éclairage 20. De cette manière, la surface peut être éclairée, au moins en partie, sans entraîner de spécularité 10.

Lors d'une étape 105 du procédé (illustrée en figure 4), l'acquisition d'une image stéréoscopique de la surface 11 de la pièce 5 est réalisée par un premier capteur 1 et un par un deuxième capteur 2. La figure 4 illustre une image 8 d'un premier capteur 1 et une image 9 d'un deuxième capteur 2, comprenant chacune deux zones d'ombre 18 sur la surface 11. Dans l'image 8 du premier capteur 1, à gauche de la figure 4, la zone d'ombre 18 de gauche correspond à une spécularité 10 éteinte, illustrée par les flèches de droite partant du premier projecteur 3, passant par la surface 11 et allant jusqu'au deuxième capteur 2. La zone d'ombre de droite correspond à une spécularité 10 éteinte illustrée par les flèches de gauche partant du premier projecteur 3, passant par la surface 11 et allant jusqu'au premier capteur 1.

Lors des étapes 111, 112, 113, 114 et 115, les étapes 101, 102, 103, 104 et 105 sont réalisées en projetant dans l'étape 111 un éclairage sur la surface 11 par un deuxième projecteur 4, éventuellement sans le premier projecteur 3. Le deuxième projecteur 4 est agencé à un endroit différent du premier projecteur 3, et peut ainsi entraîner des spécularités 10 à d'autres endroits de la surface 11, ou ne pas entraîner de spécularité.

La figure 5 illustre un système comprenant deux projecteurs. L'unité de commande 17, reliée électriquement au deuxième projecteur 4, peut contrôler l'état de fonctionnement d'une partie de l'éclairage projeté, par exemple en masquant ou en éteignant les pixels correspondant aux spécularités 10.

En haut à gauche de la figure 5, une image 8 d'un premier capteur 1, réalisée lors d'une étape 101, est illustrée. En bas à gauche de la figure 5, une image 8 d'un premier capteur 1, réalisée lors d'une étape 111, est illustrée. En haut à droite de la figure 5, une image 9 d'un deuxième capteur 2, réalisée lors d'une étape 101, est illustrée. En bas à droite de l'image 4, une image 9 d'un deuxième capteur 2, réalisée lors d'une étape 111, est illustrée.

Sur chacune des quatre images 8,9 de capteurs 1,2, illustrées dans la figure 5, des spécularités 10 différentes sont imagées. Deux spécularités 10, entraînées par le premier projecteur 3, sont identiques aux spécularités 10 illustrées dans la figure 1. Deux autres spécularités 10, entraînées par le deuxième projecteur 4, sont illustrées dans les images 8,9 du premier capteur 1 et du deuxième capteur 2, respectivement en bas à gauche et en bas à droite de la figure 5.

Lors des étapes 104 et 114, on éteint les spécularités 10 en contrôlant le premier projecteur 3 et/ou le deuxième projecteur 4 avec l'unité de commande 17. Deux images 8 d'un premier capteur 1 sont illustrées dans la figure 6. L'image en haut à gauche correspond à l'image 8 d'un premier capteur 1 lorsque la surface 11 est éclairée par un premier projecteur 3 et que les spécularités 10 entraînées par le premier projecteur 3 sont éteintes lors d'une étape 104. L'image en bas à gauche correspond à l'image 8 d'un premier capteur 1 lorsque la surface 11 est éclairée par un deuxième projecteur 4 et que les spécularités 10 entraînées par le deuxième projecteur 4 sont éteintes lors d'une étape 114. L'image en haut à droite correspond à l'image 9 d'un deuxième capteur 2 lorsque la surface 11 est éclairée par un premier projecteur 3 et que les spécularités 10 entraînées par le premier projecteur 3 sont éteintes lors d'une étape 104. L'image en bas à droite correspond à l'image 9 d'un deuxième capteur 2 lorsque la surface 11 est éclairée par un deuxième projecteur 4 et que les spécularités 10 entraînées par le premier projecteur 3 sont éteintes lors d'une étape 114.

Lors d'une étape 106 du procédé (illustrée en figure 7), les images 8 du premier capteur 1 sont fusionnées en une image 19, et les images 9 du deuxième capteur 2 sont également fusionnées en une image 19. La fusion de plusieurs images d'un même capteur 1,2, réalisées lors de la projection d'un éclairage 20 par des projecteurs différents, permet d'éliminer les zones d'ombre 18 dans une image fusionnée. La fusion peut comprendre une étape de sélection du pixel ayant la valeur la plus élevée entre deux mêmes pixels de deux images, pour chacun des pixels des images.

L'étape 106 est illustrée à gauche de la figure 7 par la fusion d'une image 8 du premier capteur 1 lors de la projection d'un éclairage 20 par le premier projecteur 3 et d'une image 8 du premier capteur 1 lors de la projection d'un éclairage 20 par le deuxième projecteur 4. L'image issue de la fusion ne comporte pas de zone d'ombre. L'étape 106 est également illustrée à droite de la figure 7 par la fusion d'une image 9 du deuxième capteur 2 lors de la projection d'un éclairage 20 par le premier projecteur 3 et d'une image 9 du deuxième capteur 2 lors de la projection d'un éclairage 20 par le deuxième projecteur 4. L'image issue de la fusion ne comporte pas de zone d'ombre.

On obtient alors deux images après l'étape 106 de fusion des images : une image sans zone d'ombre, ni spécularité, dont les informations proviennent du premier capteur 1 et une image sans zone d'ombre, ni spécularité, dont les informations proviennent du deuxième capteur 2. Ces deux images forment un couple stéréoscopique sans ombres ni spécularités.

Lors de l'étape 107 du procédé, on déduit du couple stéréoscopique un modèle tridimensionnel de la surface 11. On peut utiliser une méthode connue de stéréoscopie en utilisant les deux images 19 obtenues lors de l'étape de fusion 106. Ces images sont particulièrement aptes à être utilisées pour la stéréoscopie car elles ne comportent ni zone d'ombre ni spécularité.

La figure 2 illustre un procédé P2 de contrôle non destructif d'une pièce 5 aéronautique et de détermination d'un modèle en trois dimensions de la pièce 5. Les étapes 201 à 205 et 211 à 215 du procédé P2 sont respectivement identiques aux étapes 101 à 105 et 111 à 115 du procédé P1.

Lors de l'étape 206 et 216, on détermine un premier modèle en trois dimensions de la pièce 5 à partir des images acquises lors d'une étape 205 (à partir des images obtenues lors d'une acquisition sous éclairage du premier projecteur), et lors de l'étape 216, on détermine un deuxième modèle en trois dimensions de la pièce 5 à partir des images acquises lors d'une étape 215 (à partir des images obtenues lors d'une acquisition sous éclairage du second projecteur).

Certaines zones de la surface 11 n'étant pas éclairées, les images acquises par chacun des capteurs 1,2 ne représentent que partiellement la surface 11. Lors de l'étape 206, on détermine, à partir d'un couple d'images stéréoscopiques acquis lors de l'étape 205, un premier modèle en trois dimensions de la pièce. Ce modèle peut être déterminé par l'unité de commande 17. Il manque, dans ce modèle, des informations correspondant aux parties de la surface 11 qui ne sont pas éclairées par le premier projecteur lors de l'étape 205. Lors de l'étape 216, on détermine, à partir d'un couple d'images stéréoscopiques acquis lors de l'étape 215, un deuxième modèle en trois dimensions de la pièce 5. Ce modèle peut être déterminé par l'unité de commande 17. Il manque, dans ce modèle, des informations correspondant aux parties de la surface 11 qui ne sont pas éclairées par le deuxième projecteur dans l'étape 215.

Lors de l'étape 207, on fusionne le premier modèle et le deuxième modèle, obtenus lors des étapes 206 et 216, de manière à déterminer un troisième modèle en trois dimensions de la pièce 5, plus complet que les premier et second modèles, comprenant les informations relatives à la structure tridimensionnelle de la pièces 5 dans les parties de la surfaces 11 qui ne sont pas éclairées lors de étapes 205 et/ou 215.

Les spécularité sont éteintes lors des étapes 104, 114, 204 et/ou 214. La ou les parties de l'éclairage 20 à éteindre lors de ces étapes sont déterminées à partir des images acquises comprenant des spécularités. On peut mettre en œuvre la projection d'un motif lumineux 7 sur la pièce 5 lors des étapes 102, 112, 202 et/ou 212. On peut par exemple projeter un motif lumineux 7 sur la surface 11 au moyen du premier projecteur 3 et/ou du deuxième projecteur 4 lors de l'acquisition d'une image par l'un des capteurs 1,2. On peut ensuite associer l'image du motif lumineux 7 sur la surface 11 et le motif lumineux 7 projeté. Ainsi, il est possible d'associer un pixel du ou des capteurs 1,2 à un pixel du ou des projecteurs 3,4. On peut ensuite éteindre une ou plusieurs parties d'un projecteur 3,4, par exemple un ensemble de pixels d'un projecteur 3,4, associées à une ou plusieurs parties de l'image du motif lumineux 7 correspondant à une ou plusieurs spécularités 10.

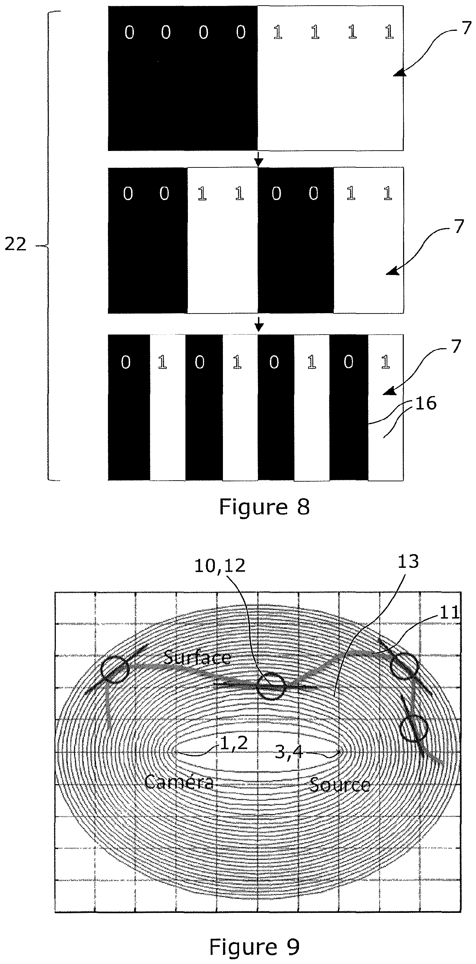

La figure 8 illustre schématiquement une séquence 22 de motifs lumineux 7. Lors de l'étape 104 et 114 du procédé, on masque et/ou on éteint la ou les parties de l'éclairage 20 entraînant une ou des spécularités 10. L'état de fonctionnement (par exemple état éteint ou allumé) d'une ou plusieurs parties de l'éclairage projeté est calculé en fonction des images de la surface 11, réalisées par les capteurs 1,2. Un utilisateur et/ou l'unité de commande 17 peut déterminer la ou les parties de l'éclairage à éteindre et/ou à masquer en projetant une séquence 22 de motifs lumineux 7. La figure 8 illustre une séquence de trois motifs lumineux 7, projetées successivement. Les différentes parties 16 d'un motif lumineux 7 correspondent aux colonnes noires ou blanches de du motif 7 du bas de la figure : huit parties 16 sont représentées. Pour chaque motif 7 de la séquence, l'intensité lumineuse d'une partie 16 projetée est binaire, représentée schématiquement dans la figure 8 par un remplissage noir ou blanc de chaque partie 16. Dans cet exemple, chaque partie 16 du motif est codée en binaire le long de la séquence de 000 (partie complétement à gauche des motifs 7 de la séquence) à 111 (partie complétement à droite de l'image de la séquence). De manière générale, la séquence projetée est différente pour chaque partie 16, ce qui permet d'identifier chacune des parties 16. Le codage binaire présenté ici est donné à titre d'exemple. Il existe des codages variés présentant des propriétés intéressantes selon le but recherché.

La surface 11 peut être filmée par un ou plusieurs capteurs 1,2 pendant la projection d'une séquence de motifs lumineux 7. Un utilisateur ou une unité de commande 17 peut déterminer une partie de l'éclairage à éteindre et/ou à masquer en détectant une spécularité, puis en identifiant la séquence émise par une partie de l'image filmée comprenant la spécularité. La séquence de cette partie de l'image peut être lue et traduite par l'unité de commande 17 de manière à identifier la partie de l'éclairage à éteindre et/ou à masquer. Les parties 16 peuvent par exemple être des pixels ou des groupes de pixels d'un projecteur.

La figure 9 illustre schématiquement une installation comprenant la surface 11 d'une pièce 5, un capteur 1,2 et un projecteur 3,4.

Lors d'une réflexion spéculaire dirigée vers un capteur 1,2, la droite normale à la surface 11 au point entraînant la réflexion spéculaire est alignée avec la bissectrice de l'angle formé par la direction du rayon incident et celle du rayon réfléchi (en application de la loi de Snell-Descartes).

Par ailleurs, la droite normale en un point d'une ellipse 13 coïncide avec la bissectrice de l'angle formé par un foyer de l'ellipse 13, ledit point et le deuxième foyer de l'ellipse 13.

Grâce à cette propriété, on sait établir un critère assez simple déterminant si un élément de surface 11 peut produire une réflexion spéculaire pour une configuration projecteur-capteur donnée : *P*₁ et *P*₂ étant les centres optiques respectifs du projecteur et du capteur, M étant un point de la surface 11, une réflexion spéculaire est possible si l'ellipse admettant pour foyers *P*₁ et *P*₂ et passant par M est tangente à la surface 11 en M. La figure 9 illustre, dans un plan comprenant les centres optiques *P*₁ et *P*₂, les seuls points de la surface adaptés à présenter une réflexion spéculaire. Il s'agit des points pour lesquels l'ellipse locale est tangente à la surface.

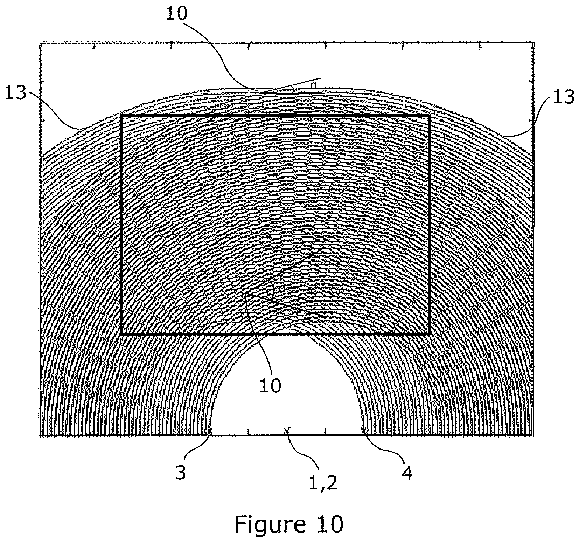

La figure 10 illustre un système comprenant un capteur 1 et plusieurs projecteurs 3,4. De manière générale, le deuxième projecteur 4 est agencé dans l'espace de manière à ce qu'aucun point de la surface 11 ne présente une réflexion spéculaire à la fois entraînée par le premier projecteur 3 et par le deuxième projecteur 4.

Ainsi, si l'éclairage 20 du premier projecteur 3 entraîne sur le capteur lune réflexion spéculaire en un point de la surface 11, la partie de la surface 11 en ce point est tangente à l'ellipse 13 ayant pour foyer le centre du projecteur 3 et le centre du capteur 1. Cette ellipse forme donc un angle suffisant, en ce point, avec l'ellipse ayant pour foyers le projecteur 4 et le centre du capteur 1, et l'éclairage 20 du second projecteur 4 ne peut donc pas entraîner de réflexion spéculaire sur le capteur 1.

Lorsque l'on met en œuvre deux capteurs 1 et 2, on peut agencer les projecteurs 3,4 et les capteurs 1,2 de manière à ce que, pour chaque capteur, l'angle α d'intersection de l'ellipse 13 ayant comme foyers le premier projecteur 3 et le capteur et de l'ellipse 13 ayant comme foyers le deuxième projecteur 4 et le capteur, soit suffisant, c'est-à-dire supérieur à 10°, dans l'ensemble de l'espace de travail dans lequel la pièce 5 est contrôlée. Ainsi, aucune zone de l'espace de travail n'est susceptible d'entraîner, sur un capteur 1,2, deux réflexions spéculaires lorsqu'elle est éclairée successivement par le projecteur 3 et par le projecteur 4. Lors du contrôle d'une pièce 5, toute partie de la pièce est donc éclairée par au moins un des projecteurs, malgré les extinctions requises.

## Revendications

1. Procédé (P1, P2) de contrôle non destructif d'une pièce (5) aéronautique, par acquisition d'images stéréoscopiques et détermination d'un modèle en trois dimensions de la pièce (5), la pièce (5) étant délimitée par une surface (11), ledit procédé mettant en œuvre :
a) une projection d'un éclairage (20) sur la surface (11) par un premier projecteur (3) ;
b) une acquisition d'une image stéréoscopique de la surface par un premier capteur (1) et par un deuxième capteur (2), agencés à deux endroits différents ;
c) une détection d'une ou de plusieurs spécularités (10) sur chacune des images des capteurs ;
le procédé étant **caractérisé en ce qu'**il met en œuvre :
d) une extinction d'une ou de parties de l'éclairage (20) entraînant la ou les spécularités en direction du ou des capteurs ; puis
e) une acquisition d'une image stéréoscopique de la surface par chacun des capteurs (1,2) ;
les opérations a) à e) étant également réalisées en projetant un éclairage (20) sur la surface par un deuxième projecteur (4), le deuxième projecteur étant agencé à un endroit différent du premier projecteur ; le procédé mettant en œuvre une détermination du modèle en trois dimensions de la pièce (5) à partir des images stéréoscopiques obtenues lors de l'acquisition e) sous éclairage du premier projecteur (3) et d'images stéréoscopiques obtenues lors de l'acquisition e) sous éclairage du deuxième projecteur (4), un premier modèle en trois dimensions de la pièce (5) étant déterminé à partir des images obtenues lors d'une acquisition e) sous éclairage du premier projecteur (3), un deuxième modèle en trois dimensions de la pièce (5) étant déterminé à partir des images obtenues lors d'une acquisition e) sous éclairage du deuxième projecteur (4), et le modèle en trois dimensions de la pièce (5) étant déterminé par fusion du premier modèle et du deuxième modèle.

2. Procédé (P1, P2) selon la revendication 1, dans lequel, lors de l'acquisition e), on projette un éclairage (20) sur la surface par le deuxième projecteur (4) sans projection simultanée d'un éclairage par le premier projecteur (3).

3. Procédé (P1) selon la revendication 1 ou 2, dans lequel lors de la détermination du modèle en trois dimensions, on fusionne les images du premier capteur (1) acquises sous différents éclairages après l'extinction d), on fusionne les images du deuxième capteur (2) acquises sous différents éclairages après l'extinction d), et on détermine le modèle en trois dimensions de la pièce (5) à partir des images ainsi obtenues par fusion.

4. Procédé (P1, P2) selon l'une des revendications 1 à 3 dans lequel on détermine la ou les parties de l'éclairage (20) à éteindre, lors de l'extinction d), en :
- projetant un motif lumineux (7) sur la surface (11) au moyen du premier projecteur (3) et/ou du second projecteur (4) ;
- associant l'image d'un motif lumineux sur la surface (11) et le motif lumineux (7) projeté ;
- éteignant une ou plusieurs parties d'un projecteur (3,4), associées à une ou plusieurs parties de l'image du motif lumineux (7) correspondant à une ou plusieurs spécularités (10).

5. Procédé (P1, P2) selon l'une des revendications 1 à 4 dans lequel on détermine la ou les parties de l'éclairage (20) à éteindre en :
- projetant une séquence (15) de motifs lumineux (7), chaque motif lumineux de la séquence (15) comprenant plusieurs parties d'intensités lumineuses binaires, la séquence des intensités de chaque partie de motif lumineux permettant d'identifier ladite partie de motif lumineux (7) ;
- filmant la surface (11) avec un capteur (1,2) pendant la projection de la séquence de motifs lumineux (7), détecter une spécularité et identifier une dite partie de l'éclairage à éteindre par la séquence d'une partie de l'image du capteur comprenant la spécularité.

6. Procédé (P1, P2) selon l'une des revendications 1 à 5 dans lequel la pièce (5) est contrôlée dans un espace de travail et dans lequel on agence le premier projecteur (3) et le deuxième projecteur (4) de manière à ce que, pour chaque capteur (1,2) et dans l'ensemble de l'espace de travail, l'angle α d'intersection de l'ellipse (13) ayant comme foyers le premier projecteur (3) et le capteur (1,2) et de l'ellipse (13) ayant comme foyers le deuxième projecteur (4) et le capteur (1,2), soit supérieur à 10°.

7. Système de contrôle non destructif d'une pièce (5) aéronautique, par détermination d'un modèle en trois dimensions de ladite pièce (5), ladite pièce (5) étant délimitée par une surface (11) comprenant une partie spéculaire (12), le système comprenant au moins un premier projecteur (3), un premier capteur (1) et un deuxième capteur (2) agencés à deux endroits différents, et une unité de commande (17), le système comprenant également un deuxième projecteur (4) agencé à un endroit différent du premier projecteur, et en ce que ladite unité de commande (17) est configurée pour :
a) commander une projection d'un éclairage (20) sur la surface (11) par le premier projecteur (3),
b) commander une acquisition d'une image stéréoscopique de la surface par le premier capteur (1) et par le deuxième capteur (2),
c) détecter une ou plusieurs spécularités (10) sur chacune des images des capteurs ;
le système étant **caractérisé en ce que** l'unité de commande (17) est également configurée pour :
d) mettre en œuvre une extinction d'une ou de parties de l'éclairage (20) par le premier projecteur (3), l'extinction étant localisée et créant sur la surface (11) éclairée par ledit premier projecteur (3) une ou plusieurs zones d'ombre locales à la place d'une ou plusieurs parties d'éclairage entraînant la ou les spécularités en direction du ou des capteurs ; puis
e) mettre en œuvre l'acquisition d'une image stéréoscopique de la surface par chacun des capteurs (1,2) ;
les opérations a) à e) étant également réalisées en projetant un éclairage (20) sur la surface par un deuxième projecteur (4), le deuxième projecteur étant agencé à un endroit différent du premier projecteur ; le procédé mettant en œuvre une détermination du modèle en trois dimensions de la pièce (5) à partir des images stéréoscopiques obtenues lors de l'acquisition e) sous éclairage du premier projecteur (3) et d'images stéréoscopiques obtenues lors de l'acquisition e) sous éclairage du deuxième projecteur (4), un premier modèle en trois dimensions de la pièce (5) étant déterminé à partir des images obtenues lors d'une acquisition e) sous éclairage du premier projecteur (3), un deuxième modèle en trois dimensions de la pièce (5) étant déterminé à partir des images obtenues lors d'une acquisition e) sous éclairage du deuxième projecteur (4), et le modèle en trois dimensions de la pièce (5) étant déterminé par fusion du premier modèle et du deuxième modèle.

## Patentansprüche

1. Verfahren (P1, P2) zur zerstörungsfreien Prüfung eines aeronautischen Teils (5) durch Erfassung stereoskopischer Bilder und Bestimmung eines dreidimensionalen Modells des Teils (5), wobei das Teil (5) durch eine Oberfläche (11) abgegrenzt ist, wobei das Verfahren durchführt:
a) eine Projektion einer Beleuchtung (20) auf die Oberfläche (11) durch einen ersten Projektor (3);
b) eine Erfassung eines stereoskopischen Bildes der Oberfläche durch einen ersten Sensor (1) und durch einen zweiten Sensor (2), die an zwei unterschiedlichen Orten eingerichtet sind;
c) eine Detektion von einer oder mehreren Spiegelungen (10) auf jedem der Bilder der Sensoren;
wobei das Verfahren **dadurch gekennzeichnet ist, dass** es durchführt:
d) eine Löschung einer Beleuchtung (20) oder von Teilen davon, durch die die eine oder mehreren Spiegelungen in Richtung des oder der Sensoren verursacht werden; dann
e) eine Erfassung eines stereoskopischen Bildes der Oberfläche durch jeden der Sensoren (1, 2);
wobei die Vorgänge a) bis e) auch durch Projizieren einer Beleuchtung (20) auf die Oberfläche durch einen zweiten Projektor (4) ausgeführt werden, wobei der zweite Projektor an einem unterschiedlichen Ort als der erste Projektor eingerichtet ist; wobei das Verfahren eine Bestimmung des dreidimensionalen Modells des Teils (5) ausgehend von den stereoskopischen Bildern, die bei der Erfassung e) unter Beleuchtung des ersten Projektors (3) erhalten wurden, und von stereoskopischen Bildern durchführt, die bei der Erfassung e) unter Beleuchtung des zweiten Projektors (4) erhalten wurden, wobei ein erstes dreidimensionales Modell des Teils (5) ausgehend von den Bildern bestimmt wird, die bei einer Erfassung e) unter Beleuchtung des ersten Projektors (3) erhalten wurden, ein zweites dreidimensionales Modell des Teils (5) ausgehend von den Bildern bestimmt wird, die bei einer Erfassung e) unter Beleuchtung des zweiten Projektors (4) erhalten wurden, und das dreidimensionale Modell des Teils (5) durch Verschmelzung des ersten Modells und des zweiten Modells bestimmt wird.

2. Verfahren (P1, P2) nach Anspruch 1, wobei bei der Erfassung e) eine Beleuchtung (20) auf die Oberfläche durch den zweiten Projektor (4) ohne gleichzeitige Projektion einer Beleuchtung durch den ersten Projektor (3) projiziert wird.

3. Verfahren (P1) nach Anspruch 1 oder 2, wobei bei der Bestimmung des dreidimensionalen Modells die Bilder des ersten Sensors (1), die unter verschiedenen Beleuchtungen nach der Löschung d) erfasst wurden, verschmolzen werden, die Bilder des zweiten Sensors (2), die unter verschiedenen Beleuchtungen nach der Löschung d) erfasst wurden, verschmolzen werden und das dreidimensionale Modell des Teils (5) ausgehend von den so durch Verschmelzung erhaltenen Bilder bestimmt wird.

4. Verfahren (P1, P2) nach einem der Ansprüche 1 bis 3, wobei der oder die bei der Löschung d) zu löschenden Teile der Beleuchtung (20) bestimmt werden durch:
- Projizieren eines Leuchtmotivs (7) auf die Oberfläche (11) mittels des ersten Projektors (3) und/oder des zweiten Proj ektors (4) ;
- Verbinden des Bildes eines Leuchtmotivs auf der Oberfläche (11) und des projizierten Leuchtmotivs (7);
- Löschen eines oder mehrerer Teile eines Projektors (3, 4), die mit einem oder mehreren Teilen des Bildes des Leuchtmotivs (7) verbunden sind, die einer oder mehreren Spiegelungen (10) entsprechen.

5. Verfahren (P1, P2) nach einem der Ansprüche 1 bis 4, wobei der oder die zu löschenden Teile der Beleuchtung (20) bestimmt werden durch:
- Projizieren einer Folge (15) von Leuchtmotiven (7), wobei jedes Leuchtmotiv der Folge (15) mehrere Teile mit binären Leuchtstärken umfasst, wobei die Folge der Stärken von jedem Teil des Leuchtmotivs das Identifizieren des Teils des Leuchtmotivs (7) ermöglicht;
- Filmen der Oberfläche (11) mit einem Sensor (1, 2) während der Projektion der Folge von Leuchtmotiven (7), Detektieren einer Spiegelung und Identifizieren eines zu löschenden Teils der Beleuchtung durch die Folge eines Teils des Bildes des Sensors, der die Spiegelung umfasst.

6. Verfahren (P1, P2) nach einem der Ansprüche 1 bis 5, wobei das Teil (5) in einem Arbeitsraum geprüft wird und wobei der erste Projektor (3) und der zweite Projektor (4) derart eingerichtet werden, dass für jeden Sensor (1, 2) und im gesamten Arbeitsraum der Schnittwinkel α der Ellipse (13), die als Brennpunkte den ersten Projektor (3) und den Sensor (1, 2) aufweist, und der Ellipse (13), die als Brennpunkte den zweiten Projektor (4) und den Sensor (1, 2) aufweist, größer als 10° ist.

7. System zur zerstörungsfreien Prüfung eines aeronautischen Teils (5) durch Bestimmung eines dreidimensionalen Modells des Teils (5), wobei das Teil (5) durch eine Oberfläche (11) abgegrenzt ist, die einen Spiegelungsteil (12) umfasst, wobei das System mindestens einen ersten Projektor (3), einen ersten Sensor (1) und einen zweiten Sensor (2), die an zwei unterschiedlichen Orten eingerichtet sind, und eine Steuereinheit (17) umfasst, wobei das System auch einen zweiten Projektor (4) umfasst, der an einer unterschiedlichen Stelle eingerichtet ist als der erste Projektor, und dadurch, dass die Steuereinheit (17) ausgestaltet ist zum:
a) Steuern einer Projektion einer Beleuchtung (20) auf die Oberfläche (11) durch den ersten Projektor (3),
b) Steuern einer Erfassung eines stereoskopischen Bildes der Oberfläche durch den ersten Sensor (1) und durch den zweiten Sensor (2),
c) Detektieren einer oder mehrerer Spiegelungen (10) auf jedem der Bilder der Sensoren;
wobei das System **dadurch gekennzeichnet ist, dass** die Steuereinheit (17) auch ausgestaltet ist zum:
d) Durchführen einer Löschung einer Beleuchtung (20) oder von Teilen davon durch den ersten Projektor (3), wobei die Löschung lokalisiert wird und eine oder mehrere lokale Schattenzonen an der Stelle eines oder mehrerer Beleuchtungsteile, die die eine oder mehreren Spiegelungen in Richtung des einen oder der mehreren Sensoren verursachen, auf der durch den ersten Projektor (3) beleuchteten Oberfläche (11) erzeugt; dann
e) Durchführen der Erfassung eines stereoskopischen Bildes der Oberfläche durch jeden der Sensoren (1, 2);
wobei die Vorgänge a) bis e) auch durch Projizieren einer Beleuchtung (20) auf die Oberfläche durch einen zweiten Projektor (4) ausgeführt werden, wobei der zweite Projektor an einer unterschiedlichen Stelle als der erste Projektor eingerichtet wird; wobei das Verfahren eine Bestimmung des dreidimensionalen Modells des Teils (5) ausgehend von den stereoskopischen Bildern, die bei der Erfassung e) unter Beleuchtung des ersten Projektors (3) erhalten wurden, und von stereoskopischen Bildern durchführt, die bei der Erfassung e) unter Beleuchtung des zweiten Projektors (4) erhalten wurden, ein erstes dreidimensionales Modell des Teils (5) ausgehend von den Bildern bestimmt wird, die bei einer Erfassung e) unter Beleuchtung des ersten Projektors (3) erhalten werden, ein zweites dreidimensionales Modell des Teils (5) ausgehend von den Bildern bestimmt wird, die bei einer Erfassung e) unter Beleuchtung des zweiten Projektors (4) erhalten werden, und das dreidimensionale Modell des Teils (5) durch Verschmelzung des ersten Modells und des zweiten Modells bestimmt wird.

## Claims

1. A Method (P1, P2) for the non-destructive testing of an aeronautical part (5), by acquisition of stereoscopic images and determination of a three-dimensional model of the part (5), the part (5) being delimited by a surface (11), said method implementing:
a) a projection of a lighting (20) on the surface (11) by a first projector (3);
b) an acquisition of a stereoscopic image of the surface by a first sensor (1) and by a second sensor (2), arranged at two different locations;
c) a detection of one or several specularities (10) on each of the images of the sensors;
the method being **characterized in that** it implements:
d) an extinction of one or several portions of the lighting (20) causing the specularity/specularities in the direction of the sensor(s); then
e) an acquisition of a stereoscopic image of the surface by each of the sensors (1, 2);
the operations a) to e) also being carried out by projecting a lighting (20) on the surface by a second projector (4), the second projector being arranged at a different location from the first projector; the method implementing a determination of the three-dimensional model of the part (5) from the stereoscopic images obtained during the acquisition e) under lighting of the first projector (3) and from stereoscopic images obtained during the acquisition e) under lighting of the second projector (4), a first three-dimensional model of the part (5) being determined from the images obtained during an acquisition e) under lighting of the first projector (3), a second three-dimensional model of the part (5) being determined from the images obtained during an acquisition e) under lighting of the second projector (4), and the three-dimensional model of the part (5) being determined by fusing the first model and the second model.

2. The method (P1, P2) according to claim 1, wherein, during the acquisition e), a lighting (20) is projected onto the surface by the second projector (4) without simultaneous projection of a lighting by the first projector (3).

3. The method (P1) according to claim 1 or 2, wherein during the determination of the three-dimensional model, the images of the first sensor (1) acquired under different lightings after extinction d) are fused, the images of the second sensor (2) acquired under different lightings after extinction d) are fused, and the three-dimensional model of the part (5) is determined from the images thus obtained by fusion.

4. The method (P1, P2) according to any of claims 1 to 3 wherein the portion(s) of the lighting (20) to be turned off, during the extinction d), are determined by:
- projecting a light pattern (7) on the surface (11) by means of the first projector (3) and/or the second projector (4);
- associating the image of a light pattern on the surface (11) and the projected light pattern (7);
- turning off one or several portions of a projector (3, 4), associated with one or several portions of the image of the light pattern (7) corresponding to one or several specularities (10).

5. The method (P1, P2) according to any of claims 1 to 4 wherein the portion(s) of the lighting (20) to be turned off are determined by:
- projecting a sequence (15) of light patterns (7), each light pattern of the sequence (15) comprising several portions of binary light intensities, the sequence of the intensities of each light pattern portion making it possible to identify said light pattern portion (7) ;
- filming the surface (11) with a sensor (1, 2) during the projection of the sequence of light patterns (7), detecting a specularity and identifying one said portion of the lighting to be turned off by the sequence of a portion of the image of the sensor comprising the specularity.

6. The method (P1, P2) according to any of claims 1 to 5 wherein the part (5) is tested in a workspace and wherein the first projector (3) and the second projector (4) are arranged such that, for each sensor (1,2) and throughout the workspace, the angle *α* of intersection of the ellipse (13) having as focal points the first projector (3) and the sensor (1, 2) and of the ellipse (13) having as focal points the second projector (4) and the sensor (1, 2), is greater than 10°.

7. A system for the non-destructive testing of an aeronautical part (5), by determination of a three-dimensional model of said part (5), said part (5) being delimited by a surface (11) comprising a specular portion (12), the system comprising at least a first projector (3), a first sensor (1) and a second sensor (2) arranged at two different locations, and a control unit (17), the system also comprising a second projector (4) arranged at a different location from the first projector, and in that said control unit (17) is configured to:
a) control a projection of a lighting (20) on the surface (11) by the first projector (3),
b) control an acquisition of a stereoscopic image of the surface by the first sensor (1) and by the second sensor (2),
c) detect one or several specularities (10) on each of the images of the sensors;
the system being **characterized in that** the control unit (17) is also configured to:
d) implement an extinction of one or several portions of the lighting (20) by the first projector (3), the extinction being localized and creating on the surface (11) illuminated by said first projector (3) one or several local shadow areas instead of one or several lighting portions causing the specularity/specularities in the direction of the sensor(s); then
e) implement the acquisition of a stereoscopic image of the surface by each of the sensors (1, 2);
the operations a) to e) being also carried out by projecting a lighting (20) on the surface by a second projector (4), the second projector being arranged at a different location from the first projector; the method implementing a determination of the three-dimensional model of the part (5) from the stereoscopic images obtained during the acquisition e) under lighting of the first projector (3) and from stereoscopic images obtained during the acquisition e) under lighting of the second projector (4), a first three-dimensional model of the part (5) being determined from the images obtained during an acquisition e) under lighting of the first projector (3), a second three-dimensional model of the part (5) being determined from the images obtained during an acquisition e) under lighting of the second projector (4), and the three-dimensional model of the part (5) being determined by fusing the first model and the second model.
